# EUROPEAN PATENT SPECIFICATION

(11) **EP 3 326 836 B1**
(45) Date of publication and mention of the grant of the patent: **26.08.2020**
(21) Application number: 16827265.6
(22) Date of filing: 21.07.2016
(51) Int. Cl.: B60B 27/02

(54) **LIGHTWEIGHT HUB MADE OF ALUMINUM-STEEL COMPOSITE MATERIALS**
LEICHTE NABE AUS ALUMINIUM-STAHL-VERBUNDSTOFFMATERIALIEN
MOYEU LÉGER COMPOSÉ DE MATÉRIAUX COMPOSITES D'ALUMINIUM ET D'ACIER

(30) Priority: 21.07.2015 CN 201520532507 U
(43) Date of publication of application: 30.05.2018
(73) Proprietor: LTW Tech (Tianjin) Co., Ltd, Wuqing Development Area Tianjin (CN)
(72) Inventor: DONG, Jianhua, Tianjin 301700 (CN)
(74) Representative: Gille Hrabal
(86) International application number: PCT/CN2016/090934
(87) International publication number: WO 2017/012574

(56) References cited:
- EP-A1- 2 468 528
- EP-A1- 2 604 445
- CN-A- 103 963 562
- CN-A- 104 999 858
- CN-U- 205 044 417
- CN-Y- 2 705 324
- JP-A- S59 167 301
- JP-A- S59 167 302
- US-A1- 2011 248 555
- US-A1- 2014 233 876

## Description

### TECHNICAL FIELD

The present invention relates to the technical field of a hub, particularly to a lightweight hub made of a steel-aluminum composite material.

### BACKGROUND

As science and society have advanced, low-carbon green has been the theme. Low cost, low energy consumption and low pollution are achieved by applying new technologies, new processes and new materials, light weight of product components coincides with this trend, is required by development of enterprises themselves, and is the social duty and responsibility to be obliged by the enterprises. A hub is an important part of a moving machine. The lightweight hub may reduce the moving mass, decrease the rotational inertia, reduce the operational resistance, and effectively improve the mechanical transmission efficiency. The hub in the prior art is mostly made of a cast iron alloy or structural alloy steel or molded from a single lightweight material. However, two kinds of hubs have the following defects, particularly:
a traditional hub made of a cast iron alloy or structural alloy steel:
in an axle, the hub is connected with a half shaft, a wheel and a brake drum to transmit a driving and braking force and a moment. Such a use function requires the hub to have relatively high strength, rigidity and toughness. Therefore, traditionally, the hub is made of a material with relatively high strength and toughness, such as ductile iron QT450-5, 42CrMo structural alloy steel and the like. A molding method mainly includes casting and forging. Compared with hubs made of light alloy materials or ferrous alloy materials, the hub is high in melting temperature, high in energy consumption, difficult in cutting and high in treatment cost in a production process. In a use process, due to high density and large weight, the driving energy consumption is high, and energy conversion and emission reduction are not facilitated. A weight reduction ratio achieved by performing a finite element lightweight structure optimization design on an existing hub made of the ferrous alloy material is limited, which does generally not exceed 10 %, and may not meet a requirement of light weight of the complete vehicle for parts according to higher and higher energy consumption and emission regulations; and
a hub mold from a single lightweight material:

For the above deficiencies of the cast iron alloy and the steel, some lightweight materials with relatively low density are used to manufacture the hub, such as an aluminum alloy, a magnesium alloy and a polymer. Molding processes include sand casting, metal mould high-pressure casting, gravity or low-pressure casting, forging and thermoforming. With the aluminum alloy as an example, its density and elastic modulus are about one-third of those of a steel material, so that a greater volume of the aluminum alloy must be used to meet requirements of the product for stiffness and strength, the weight reduction ratio does generally not exceed 40 %; and meanwhile, the aluminum alloy has some insurmountable shortcomings, such as low yield strength, large thermal expansion coefficient, significant heat fading, and the like, which may not reliably meet use requirements, such that popularization and application of the hub made of the aluminum alloy are limited. It is referred to the documents EP2604445A1, US2011248555A1, US2014233876A1, EP2468528A1, CN104999858A, CN205044417U, CN103963562A, JPS59167302A, CN2705324Y and JPS59167301A, which disclose lightweight hubs.

### SUMMARY

In order to effectively solve the above problems, a lightweight hub according to claim 1 and a method according to claim 6 is provided. Preferred embodiments are described in the dependent claims.

The lightweight hub is made of a steel-aluminum composite material.

Preferably, the lightweight hub made of a steel-aluminum composite material is entirely made of steel and an aluminum alloy, and is applied in a chassis of a land wheeled vehicle.

Further, according to the present disclosure, the hub includes an aluminum alloy base body, an outer bearing hole steel sleeve, an inner bearing hole steel sleeve, an outer bearing outer race, an inner bearing outer race and a plurality of bolt hole steel inserts; wherein the outer bearing outer race and the inner bearing outer race are respectively press-fitted into the outer bearing hole steel sleeve and the inner bearing hole steel sleeve in an interference manner, so as to be fixedly connected with the hub; a plurality of bolt holes on circumferential side of a flange of the aluminum alloy base body are provided with bolt hole steel inserts, bolt hole steel inserts are provided around circumferential sides of the bolt holes, end faces of the steel inserts are exposed on a flange surface of the aluminum alloy base body so as to be in direct contact with bolt heads or other fastening connectors.

Further, wheel bolts penetrate through wheel bolt hole inserts for fastening a rim and a brake drum on the hub by using wheel nuts, brake disc bolts penetrate through brake disc bolt hole inserts for fastening a brake disc on the hub; and an end face gear ring of a brake acceleration sensor is mounted on the hub.

According to the invention, the outer bearing hole steel sleeve is made of a material with the same thermal expansion coefficient as that of the outer bearing outer race, and the inner bearing hole steel sleeve is made of a material with the same thermal expansion coefficient as that of the inner bearing outer race.

According to the invention, the aluminum alloy hub is provided with bearing outer race bushings on the bearing outer races.

Further, a plurality of inserts made of a high-strength material are provided on circumferential sides of the bolt holes, the inserts are in direct contact with fastening bolts and nuts, and the bushings and the plurality of inserts are provided independently.

Further, threaded grooves, trenches or planes are provided on both the bushings and the inserts.

Further, the wheel bolts penetrate through the wheel bolt hole inserts for connecting the rim and the brake drum onto the hub, and are fastened by using the wheel nuts.

According to the invention, both the bushings and the inserts are cast-molded from ductile iron or steel.

The following technical effects can be achieved:
light weight, namely, in comparison with a ferrous metal, a weight reduction ratio is more than 50 %;
high strength, namely, in comparison with a lightweight material such as an aluminum alloy, a local yield strength is increased from 206 Mpa to 353 Mpa or more, which is increased by 30 %, while there still remains a relatively large process adjustment range;
wide technical range, namely, a molding process is suitable for all structural shapes of hubs; and
low cost, namely, in comparison with the entire adoption of a high-strength aluminum alloy, the cost is lowered.

### BRIEF DESCRIPTION OF THE DRAWINGS

FIG. 1 is a schematic cross-sectional diagram showing a structure according to the invention (a lightweight hub made of a steel-aluminum composite material), and
FIG. 2 is a schematic diagram showing an assembly structure of the present invention in a rim component.

### DETAILED DESCRIPTION

Objectives, technical solutions and advantages of the invention will become more apparent from the following detailed description of the present patent application when taken in conjunction with accompanying drawings and embodiments. It should be understood that specific embodiments described herein are merely illustrative and are not intended to limit the claims.

In order to give the public a better understanding of the invention, some specific details are described below in detail in the following detailed description of the patent application. It will be appreciated by those skilled in the art that the patent application may be understood without reference to the details.

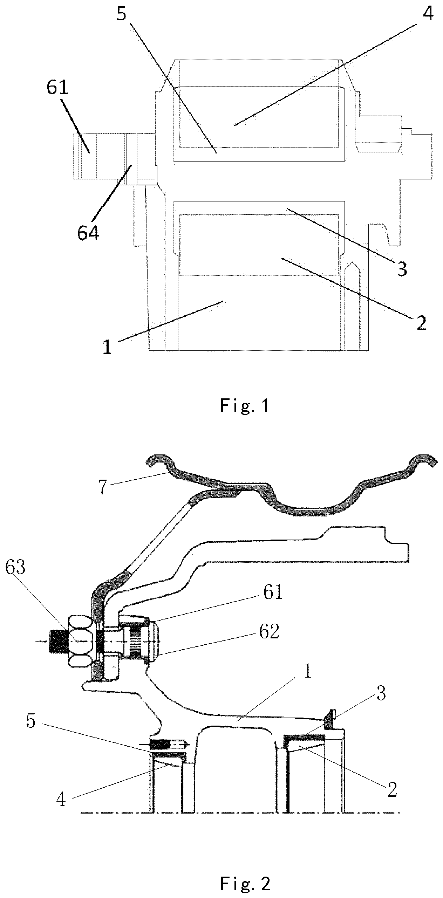

The patent application provides a lightweight hub made of a bimetallic material. As shown in FIG. 1, the lightweight hub made of a bimetallic material includes a hub body 1, wherein the hub body 1 is an aluminum alloy base body and is integrally formed from an aluminum alloy to achieve light weight of a hub of an axle of a land wheeled vehicle.

An outer bearing hole bushing 3 and an inner bearing hole bushing 5 as well as a plurality of bolt hole inserts 61, 64 are fixedly connected with the hub body 1 by means of a low-pressure or gravity cast-molding process.

An outer bearing outer race 2 and an inner bearing outer race 4 are parts of a bearing standard component, are provided by the special bearing manufacturer, and are generally made of carbon alloy steel; and the outer bearing outer race 2 and the inner bearing outer race 4 are respectively assembled into the outer bearing bore bushing 3 and the inner bearing bore bushing 5 in an interference fit manner, so as to achieve a rotational connection of the lightweight hub with an axle housing.

A thermal expansion coefficient of the aluminum alloy is about 2 times of that of the carbon alloy steel. If the bearing outer races are directly press-fitted into aluminum alloy holes in an interference manner, when a working temperature changes, the interference amount will be decreased or increased, resulting in a phenomenon of oversized holding force and loose fit, and even in a failure of "bearing hole cracks" or "bearing outer race rejection". By providing the bushing 3 and the bushing 5 with the same or similar thermal expansion coefficient as that of the bearing outer race in the bearing holes, the transition between thermal expansion properties of the two materials is achieved, and the problem of inconsistent thermal deformation of a matching surface between the bearing outer races and bearing mounting holes due to a large difference in the thermal expansion coefficients is solved. When the working temperature changes, the invention maintains a mating relationship of an original design mating pair unchanged, and solves the problems in design, process and use of a change in a pretightening force and the like due to "rejection", "temperature-difference assembly" and "change in interference amount".

Furthermore, the bushings and the inserts (the inner bearing hole bushing 3, the outer bearing hole bushing 5 as well as the plurality of inserts) employ special structures and manufacturing processes, particularly helical grooves, trenches and planes, as well as special dissimilar material transitional-connection process, to activate a material base body to more effectively bond the ductile iron and a bonding surface of steel and the aluminum alloy by means of a physical method and a chemical method.

As shown in FIG. 2, bolt holes are uniformly provided in an outer circumferential side of the hub body 1, bolt hole inserts 61 are provided on circumferential sides of the bolt holes, wheel bolts 62 penetrate through wheel bolt hole inserts 61 for connecting a rim 7 and a brake drum onto the hub, and are fastened by using wheel nuts 63; and the bolt hole inserts 61 are made of ductile iron or steel with relatively high yield strength for being in direct contact with the wheel bolts 62 and the wheel nuts and other fastening connectors, in order to improve the local crushing strength of the hub.

The patent application solves the problem of light weight of the hub of the vehicle, which is reduced by more than 50 % in comparison with the ferrous metal; solves the problem of the cost of the lightweight hub, which is lowered when the hub is made of a common aluminum alloy in comparison with a hub integrally made of a single high-strength high-performance aluminum alloy; and solves the problem of inconsistent thermal deformation due to different thermal expansion coefficients of two materials when bearing outer races made of the carbon alloy steel are directly assembled into bearing holes made of the aluminum alloy. Particularly, as the working temperature is decreased (or increased), the interference amount of the bearing outer races is increased (or decreased), which causes problems that the bearing holes made of the aluminum alloy are crushed to form cracks, or a bearing is seized, or the bearing outer races radially loosen and slide. The problem of poor assembly manufacturability of the entire hub made of the aluminum alloy is solved. Since the entire hub made of the aluminum alloy needs a large interference amount when the bearing outer races are assembled, it is necessary to press the heated bearing holes of the hub after the bearing outer races are frozen, resulting in poor assembly operation manufacturability. However, a preset bushings of the bearing outer races adopted in the present disclosure are assembled with a normal interference amount at a room temperature, so good operation manufacturability is achieved. The problem of insufficient crushing strength of a common hub made of the aluminum alloy is solved, a plurality of inserts made of a high-strength material are provided on the circumferential sides of a plurality of (20) bolt holes so as to be in direct contact with fastening bolts and nuts, so that the local crushing strength of the hub made of the aluminum alloy is improved. Two independent inner and outer bushings and a plurality of (20) inserts are provided, so that significant weight reduction effect is realized. The wheel bolts 62 penetrate through the wheel bolt hole inserts 61 for connecting the rim 7 and the brake drum onto the hub, and are fastened by using the wheel nuts 63. Threaded grooves, trenches and planes are provided on the bushings and the inserts. The friction drive of the end faces is compressed by means of bolt connection. According to the invention, it is molded by means of a low-pressure casting or gravity casting process, and is wide in technical range. The bushings and the inserts are cast-molded from the ductile iron or steel. A special dissimilar material transitional-connection treatment process is used to activate the material base body, so that the ductile iron and a bonding surface of the steel and the aluminum alloy are more effectively bonded by means of the physical method and the chemical method.

## Claims

1. A lightweight hub made of a steel-aluminum composite material, which is applied in a chassis of a land wheeled vehicle, wherein the hub comprises an aluminum alloy base body (1), an outer bearing hole steel sleeve, an inner bearing hole steel sleeve, an outer bearing outer race (2), an inner bearing outer race (4) and a plurality of bolt hole steel inserts (61, 64); wherein the outer bearing outer race (2) and the inner bearing outer race (4) are respectively press-fitted into the outer bearing hole steel sleeve and the inner bearing hole steel sleeve in an interference manner, so as to be fixedly connected with the hub; and a plurality of bolt holes in a circumferential side of a flange of the aluminum alloy base body (1) are provided with bolt hole steel inserts (61, 64), the bolt hole steel inserts (61, 64) being provided around circumferential sides of the bolt holes, and end faces of the steel inserts (61, 64) are exposed on a flange surface of the aluminum alloy base body (1) so as to be in direct contact with bolt heads or other fastening connectors; wherein the outer bearing hole steel sleeve, namely an outer bearing bore bushing (3), is made of a material with the same thermal expansion coefficient as that of the outer bearing outer race (2), and the inner bearing hole steel sleeve, namely an inner bearing bore bushing (5), is made of a material with the same thermal expansion coefficient as that of the inner bearing outer race (4), wherein both the bushings (3, 5) and the inserts (61, 64) are cast-molded from ductile iron or steel and fixedly connected with the hub body (1) by means of a low-pressure or gravity cast-molding process.

2. The lightweight hub made of a steel-aluminum composite material according to claim 1, wherein wheel bolts penetrate through wheel bolt hole inserts (61, 64) for fastening a rim and a brake drum on the hub by using wheel nuts; brake disc bolts penetrate through brake disc bolt hole inserts (61, 64) for fastening a brake disc on the hub; and an end face gear ring of a brake acceleration sensor is mounted on the hub.

3. The lightweight hub made of a steel-aluminum composite material according to claim 2, wherein a plurality of inserts (61, 64) made of a high-strength material are provided on circumferential sides of the bolt holes, the inserts (61, 64) are in direct contact with fastening bolts and nuts, and the bushings (3, 5) and the plurality of inserts (61, 64) are provided independently.

4. The lightweight hub made of a steel-aluminum composite material according to claim 3, wherein threaded grooves, trenches or planes are provided on both the bushings (3, 5) and the inserts (61, 64).

5. The lightweight hub made of a steel-aluminum composite material according to claim 4, wherein the wheel bolts penetrate through the wheel bolt hole inserts (61, 64) for connecting the rim and the brake drum onto the hub, and are fastened by using the wheel nuts.

6. Method for producing a lightweight hub made of a steel-aluminum composite material, which is applied in a chassis of a land wheeled vehicle, wherein the hub comprises an aluminum alloy base body (1), an outer bearing hole steel sleeve, an inner bearing hole steel sleeve, an outer bearing outer race (2), an inner bearing outer race (4) and a plurality of bolt hole steel inserts (61, 64); wherein the outer bearing outer race (2) and the inner bearing outer race (4) are respectively press-fitted into the outer bearing hole steel sleeve and the inner bearing hole steel sleeve in an interference manner, so as to be fixedly connected with the hub; and a plurality of bolt holes in a circumferential side of a flange of the aluminum alloy base body (1) are provided with bolt hole steel inserts (61, 64), the bolt hole steel inserts (61, 64) being provided around circumferential sides of the bolt holes, and end faces of the steel inserts (61, 64) are exposed on a flange surface of the aluminum alloy base body (1) so as to be in direct contact with bolt heads or other fastening connectors; wherein the outer bearing hole steel sleeve, namely an outer bearing bore bushing bushing (3), is made of a material with the same thermal expansion coefficient as that of the outer bearing outer race (2), and the inner bearing hole steel sleeve, namely an inner bearing bore bushing (5), is made of a material with the same thermal expansion coefficient as that of the inner bearing outer race (4),
wherein both the bushings (3, 5) and the inserts (61, 64) are cast-molded from ductile iron or steel and fixedly connected with the hub body (1) by means of a low-pressure or gravity cast-molding process.

## Patentansprüche

1. Eine leichtgewichtige Nabe aus einem Stahl-Aluminium-Verbundmateriai, die in einem Fahrgestell eines Landradfahrzeugs verwendet wird, wobei die Nabe einen Aluminiumlegierungs-Grundkörper (1), eine äußere Lagerloch-Stahlhülse, eine innere Lagerloch-Stahlhülse, einen äußeren Lageraußenring (2), einen inneren Lageraußenring (4) und eine Vielzahl von Bolzenloch-Stahleinsätzen (61, 64) umfasst; wobei der äußere Lageraußenring (2) und der innere Lageraußenring (4) jeweils in die äußere Lagerloch-Stahlhülse und die innere Lagerloch-Stahlhülse mit Presspassung eingepasst sind, so dass sie fest mit der Nabe verbunden sind; und eine Vielzahl von Bolzenlöchern in einer Umfangsseite eines Flansches des Aluminiumlegierungs-Grundkörpers (1) mit Bolzenloch-Stahleinsätzen (61, 64) versehen sind, wobei die Bolzenloch-Stahleinsätze (61, 64) um Umfangsseiten der Bolzenlöcher herum vorgesehen sind und Stirnseiten der Stahleinsätze (61, 64) auf einer Flanschfläche des Aluminiumlegierungs-Grundkörpers (1) freiliegen, so dass sie in direktem Kontakt mit Bolzenköpfen oder anderen Befestigungsverbindern stehen; wobei die äußere Lagerloch-Stahlhülse, nämlich eine äußere Lagerbohrungsbuchse (3), aus einem Material mit dem gleichen Wärmeausdehnungskoeffizienten wie dem des äußeren Lageraußenrings (2) hergestellt ist, und die innere Lagerloch-Stahlhülse, nämlich eine innere Lagerbohrungsbuchse (5), aus einem Material mit dem gleichen Wärmeausdehnungskoeffizienten wie dem des inneren Lageraußenrings (4) hergestellt ist,
wobei sowohl die Buchsen (3, 5) als auch die Einsätze (61, 64) aus duktilem Eisen oder Stahl gegossen und mittels eines Niederdruck- oder Schwerkraftgießverfahrens fest mit dem Nabenkörper (1) verbunden sind.

2. Die leichtgewichtige Nabe aus einem Stahl-Aluminium-Verbundmaterial nach Anspruch 1, wobei Radbolzen durch Radbolzen-Locheinsätze (61, 64) zur Befestigung einer Felge und einer Bremstrommel an der Nabe unter Verwendung von Radmuttern hindurchgehen; Bremsscheibenbolzen durch Bremsscheibenbotzen-Locheinsätze (61, 64) zur Befestigung einer Bremsscheibe an der Nabe hindurchgehen; und ein Stirnseiten-Zahnkranz eines Bremsbeschteunigungssensors an der Nabe montiert ist.

3. Die leichtgewichtige Nabe aus einem Stahl-Aluminium-Verbundmaterial nach Anspruch 2, wobei eine Vielzahl von Einsätzen (61, 64) aus einem hochfesten Material an den Umfangsseiten der Bolzenlöcher vorgesehen sind, die Einsätze (61, 64) in direktem Kontakt mit Befestigungsbolzen und Muttern stehen und die Buchsen (3, 5) und die Vielzahl von Einsätzen (61, 64) unabhängig voneinander vorgesehen sind..

4. Die leichtgewichtige Nabe aus einem Stahl-Aluminium-Verbundmaterial nach Anspruch 3, wobei sowohl an den Buchsen (3, 5) als auch an den Einsätzen (61, 64) Gewindenuten, Gräben oder Ebenen vorgesehen sind.

5. Die leichtgewichtige Nabe aus einem Stahl-Aluminium-Verbundmaterial nach Anspruch 4, wobei die Radbolzen zur Verbindung der Felge und der Bremstrommel auf der Nabe durch die Radbolzen-Locheinsätze (61, 64) hindurchgehen und mit den Radmuttern befestigt sind.

6. Verfahren zur Herstellung einer leichtgewichtigen Nabe aus einem Stahl-Aluminium-Verbundmaterial, die in einem Fahrgestell eines Landradfahrzeugs verwendet wird, wobei die Nabe einen Aluminiumlegierungs-Grundkörper (1), eine äußere Lagerloch-Stahlhülse, eine innere Lagerloch-Stahlhülse, einen äußeren Lageraußenring (2), einen inneren Lageraußenring (4) und eine Vielzahl von Bolzenloch-Stahleinsätzen (61, 64) umfasst; wobei der äußere Lageraußenring (2) und der innere Lageraußenring (4) jeweils in die äußere Lagerloch-Stahlhülse und die innere Lagerloch-Stahlhülse mit Presspassung eingepasst werden, so dass sie fest mit der Nabe verbunden sind; und eine Vielzahl von Bolzenlöchern in einer Umfangsseite eines Flansches des Aluminiumlegierungs-Grundkörpers (1) mit Bolzenloch-Stahleinsätzen (61, 64) versehen werden, wobei die Bolzenloch-Stahleinsätze (61, 64) um Umfangsseiten der Bolzenlöcher herum vorgesehen werden und Stirnseiten der Stahleinsätze (61, 64) auf einer Flanschfläche des Aluminiumlegierungs-Grundkörpers (1) freiliegen, so dass sie in direktem Kontakt mit Bolzenköpfen oder anderen Befestigungsverbindern stehen; wobei die äußere Lagerloch-Stahlhülse, nämlich eine äußere Lagerbohrungsbuchsenbuchse (3), aus einem Material mit dem gleichen Wärmeausdehnungskoeffizienten wie dem des äußeren Lageraußenrings (2) hergestellt wird, und die innere Lagerloch-Stahlhülse, nämlich eine innere Lagerbohrungsbuchse (5), aus einem Material mit dem gleichen Wärmeausdehnungskoeffizienten wie dem des inneren Lageraußenrings (4) hergestellt wird,
wobei sowohl die Buchsen (3, 5) als auch die Einsätze (61, 64) aus duktilem Eisen oder Stahl gegossen und mittels eines Niederdruck- oder Schwerkraftgießverfahrens fest mit dem Nabenkörper (1) verbunden werden.

## Revendications

1. Moyeu léger fait d'un matériau composite acier-aluminium, qui est appliqué dans un châssis d'un véhicule à roues terrestres, dans lequel le moyeu comprend un corps de base en alliage d'aluminium (1), un manchon en acier à trou de palier extérieur, un manchon en acier à trou de palier intérieur, une bague extérieure de palier extérieur (2), une bague extérieure de palier intérieur (4) et une pluralité d'inserts en acier à trou de boulon (61, 64) ;dans lequel la bague extérieure du roulement extérieur (2) et la bague extérieure du roulement intérieur (4) sont respectivement emmanchées à force dans le manchon en acier du trou de roulement extérieur et le manchon en acier du trou de roulement intérieur de manière interférente, de manière à être solidement reliées au moyeu ;et une pluralité de trous de boulon dans un côté circonférentiel d'une bride du corps de base en alliage d'aluminium (1) sont munis d'inserts en acier pour trous de boulon (61, 64), les inserts en acier pour trous de boulon (61, 64) étant prévus autour des côtés circonférentiels des trous de boulon, et les faces d'extrémité des inserts en acier (61, 64) sont exposées sur une surface de bride du corps de base en alliage d'aluminium (1) de manière à être en contact direct avec les têtes de boulon ou d'autres connecteurs de fixation ;dans lequel le manchon en acier du trou de palier extérieur, à savoir une douille d'alésage de palier extérieur (3), est constitué d'un matériau ayant le même coefficient de dilatation thermique que celui de la bague extérieure de palier extérieur (2), et le manchon en acier du trou de palier intérieur, à savoir une douille d'alésage de palier intérieur (5), est constitué d'un matériau ayant le même coefficient de dilatation thermique que celui de la bague extérieure de palier intérieur (4),
dans lequel les douilles (3, 5) et les inserts (61, 64) sont moulés en fonte ductile ou en acier et reliés de manière fixe au corps du moyeu (1) au moyen d'un procédé de moulage à basse pression ou par gravité.

2. Moyeu léger fait d'un matériau composite acier-aluminium selon la revendication 1 , dans lequel les boulons de roue pénètrent à travers les inserts de trous de boulon de roue (61, 64) pour fixer une jante et un tambour de frein sur le moyeu en utilisant des écrous de roue ; les boulons de disque de frein pénètrent à travers les inserts de trous de boulon de disque de frein (61, 64) pour fixer un disque de frein sur le moyeu ;et un anneau d'engrenage de face d'extrémité d'un capteur d'accélération de frein est monté sur le moyeu.

3. Moyeu léger fait d'un matériau composite acier-aluminium selon la revendication 2, dans lequel une pluralité d'inserts (61, 64) fait d'un matériau à haute résistance sont prévus sur les côtés circonférentiels des trous de boulon, les inserts (61, 64) sont en contact direct avec les boulons et les écrous de fixation, et les douilles (3, 5) et la pluralité d'inserts (61, 64) sont prévus indépendamment.

4. Moyeu léger fait d'un matériau composite acier-aluminium selon la revendication 3, dans lequel des rainures, des tranchées ou des plans filetés sont prévus à la fois sur les douilles (3, 5) et les inserts (61, 64).

5. Moyeu léger fait d'un matériau composite acier-aluminium selon la revendication 4, dans lequel les boulons de roue pénètrent à travers les inserts (61, 64) de trous de boulons de roue pour relier la jante et le tambour de frein au moyeu, et sont fixés en utilisant les écrous de roue.

6. Procédé de fabrication d'un moyeu léger fait d'un matériau composite acier-aluminium, qui est appliqué dans un châssis d'un véhicule terrestre à roues, dans lequel le moyeu comprend un corps de base en alliage d'aluminium (1), un manchon en acier pour trou de palier extérieur, un manchon en acier pour trou de palier intérieur, une bague extérieure de palier extérieur (2), une bague extérieure de palier intérieur (4) et une pluralité d'inserts en acier pour trou de boulon (61, 64) ;dans lequel la bague extérieure du roulement extérieur (2) et la bague extérieure du roulement intérieur (4) sont respectivement emmanchées à force dans le manchon en acier du trou de roulement extérieur et le manchon en acier du trou de roulement intérieur de manière interférente, de manière à être solidement reliées au moyeu ;et une pluralité de trous de boulon dans un côté circonférentiel d'une bride du corps de base en alliage d'aluminium (1) sont munis d'inserts en acier pour trous de boulon (61, 64), les inserts en acier pour trous de boulon (61, 64) étant prévus autour des côtés circonférentiels des trous de boulon, et les faces d'extrémité des inserts en acier (61, 64) sont exposées sur une surface de bride du corps de base en alliage d'aluminium (1) de manière à être en contact direct avec les têtes de boulon ou d'autres connecteurs de fixation ;dans lequel le manchon en acier du trou de palier extérieur, à savoir une douille de palier extérieur (3), est constitué d'un matériau ayant le même coefficient de dilatation thermique que celui de la bague extérieure du palier extérieur (2), et le manchon en acier du trou de palier intérieur, à savoir une douille de palier intérieur (5), est constitué d'un matériau ayant le même coefficient de dilatation thermique que celui de la bague extérieure du palier intérieur (4), dans lequel les douilles (3, 5) et les inserts (61, 64) sont moulés en fonte ductile ou en acier et reliés de manière fixe au corps du moyeu (1) au moyen d'un procédé de moulage à basse pression ou par gravité.
